# EUROPÄISCHE PATENTSCHRIFT

(11) **EP 1 195 584 B1**
(45) Veröffentlichungstag und Bekanntmachung des Hinweises auf die Patenterteilung: **16.11.2005**
(21) Anmeldenummer: 01203642.2
(22) Anmeldetag: 24.09.2001
(51) Int. Cl.: G01G 21/28

(54) **Waage mit Wägeraumeinrichtung**
Scale with a device in a weighing place
Balance avec un dispositif dans un espace de pesage

(30) Priorität: 04.10.2000 CH 19572000
(43) Veröffentlichungstag der Anmeldung: 10.04.2002
(73) Patentinhaber: Mettler-Toledo GmbH, 8606 Greifensee (CH)
(72) Erfinder: Lüchinger, Paul, 8610 Uster (CH)

(56) Entgegenhaltungen:
- DE-U- 9 203 744
- DE-U- 29 912 867

## Beschreibung

Die Erfindung betrifft eine Waage mit einem Wägeraum, einem eine Wägezelle enthaltenden, die Rückwand und den Boden des Wägeraums bildenden Waagengehäuse und einem Träger zur Aufnahme von Wägegut an einem Ausleger der Wägezelle.

Waagen dieser Art dienen häufig als Analysenwaagen, die vielerorts in Labors Anwendung finden.

In der DE-U-299 12 867 ist eine Waage offenbart, die neben der ausserhalb des Waagengehäuses angebrachten Anzeige für das Wägeergebnis eine innerhalb des Windschutzes an der feststehenden Rückwand der Waage befestigte Zusatzanzeige aufweist, die Klimaparameter und/oder die Uhrzeit anzeigen kann.

Eine andere Waage ist in der DE-U-92 03 744 beschrieben. Diese Waage erlaubt die Installation von elektronischen Messelementen auf der Waagschale, indem eine Hilfsschale zur Aufnahme des Wägegutes sowie des Messelements mit der Waagschale verbunden ist. Auf der Hilfsschale ist ein Verbindungselement mit Steckkontakt für das Messelement lösbar angeordnet. Ein einstellbares Stativ für die Auswerteeinheit ist ausserhalb der Waage angeordnet. Die elektrische Leitungsverbindung zwischen dem Verbindungselement auf der Hilfsschale und dem Stativ übernimmt nur horizontale Kräfte.

Allen diesen bekannten Waagen ist gemeinsam, dass sie bezüglich verschiedener Anwendungen sehr eingeschränkt und wenig flexibel sind.

Die mit der Erfindung verbundene Aufgabe besteht somit darin, eine Waage vorzuschlagen, die kompakt gebaut ist und dennoch eine Vielzahl von Anwendungen zulässt. Ferner sollte eine optimale Handhabung aus ergonomischer Sicht gewährleistet sein.

Diese Aufgabe wird erfindungsgemäss durch die Merkmale des Anspruchs 1 gelöst.

Eine Waage mit einem Wägeraum, einem eine Wägezelle enthaltenden, die Rückwand und den Boden des Wägeraums bildenden Waagengehäuse und einem Träger zur Aufnahme von Wägegut an einem Ausleger der Wägezelle weist an der Rückwand des Wägeraums ein festes Haltesystem für das Befestigen von Wägeraum-Zubehör auf verschiedenen Höhen über dem Boden auf.

Die erfindungsgemässe Waage zeichnet sich durch eine kompakte Bauweise aus. Eine Vielzahl von Anwendungen, die weiter unten beispielhaft beschrieben werden, ist möglich. Damit ist die Waage flexibel, beispielsweise für verschiedenartige Experimente, die im Inneren des Wägeraums ausgeführt werden können.

In einer bevorzugten Ausgestaltung der Erfindung weist das Haltesystem zwei parallel zur Rückwand verlaufende Nuten auf, und in einer Weiterführung dieser Ausgestaltung befindet sich in der Rückwand des Wägeraums ein säulenartiger Vorsprung, in dessen Seiten Nuten verlaufen. Das Haltesystem weist eine Vielzahl von gleichartigen Formungen auf, durch welche ein entsprechend geformtes Gegenstück des Wägeraum-Zubehörs formschlüssig gehalten wird.

In vorteilhafter Weise können nun an das Haftesystem Zwischenböden, Halterungen für Laboreinrichtungen und/oder eine Waagenanzeige oder, zur Vermeidung von elektrostatischen Aufladungen, ein lonisator in der Höhe verstellbar angebracht werden. Die an das Haltesystem anbringbaren Zwischenböden können für die Ablage von Substanzgefässen, Werkzeugen etc. dienlich sein. Das Haltesystem ist so ausgebildet, dass die Laboreinrichtungen und/oder eine Waagenanzeige leicht befestigt oder entfernt werden können. Solche Laboreinrichtungen sind beispielsweise Dosiervorrichtungen für pulverförmige oder flüssige Substanzen

Je nach Anwendung kann das Haltesystem auch Leiterschienen für eine Strom- und/oder eine Datenversorgung aufweisen.

Als weitere Ausgestaltung der Waage ist im Falle von Genauigkeitsanforderungen an das Wägeresultat, die im Mikrogrammbereich liegen, ein Innenwindschutz am Haltesystem-anbringbar, dessen Seitenwände zum Einbringen des Wägeguts nach oben verschiebbar ausgebildet sind.

In einer vorteilhaften Ausführungsform ist am Haltesystem ein motorischer Antrieb für die Höhenverstellung des am Haltesystem angebrachten Wägeraum-Zubehörs vorhanden.

In einer bevorzugten Ausgestaltung der Erfindung weist der Ausleger der Wägezelle eine durch Durchführungen in der Rückwand des Wägeraums reichende Koppelanordnung auf, mittels derer der Träger zur Aufnahme von Wägegut am Ausleger abnehmbar angebracht ist. Insbesondere ist die Koppelanordnung für die Ankopplung des Trägers am mit der Wägezelle verbundenen Ausleger seitlich des Haltesystems durchgeführt und/oder in der Flucht der Nuten angeordnet.

Gemäss einer weiteren bevorzugten Ausführungsform ist der Träger als ebenes Gitter ausgebildet. Dadurch bieten sich viele mögliche Anwendungen für das Wägen in einem Labor. Beispielsweise können Behältnisse oder Aufsätze verschiedenster Art auf das Gitter aufgesetzt und/oder an dem Gitter festgeklemmt werden. Verschüttetes Wägegut bleibt nicht auf dem Träger liegen, sondern fällt zwischen den Gitterstäben vom Gitter herab und kann nicht versehentlich mitgewogen werden. Eine besonders günstige Ausgestaltung des Gitters, nämlich die der Ausformung der Gitterstäbe mit einen nach oben spitz zulaufenden Querschnitt, reduziert die Möglichkeit von Fehlmessungen aufgrund von verschüttetem Wägegut noch weiter.

Der Träger kann jedoch auch als Halter für Laborgefässe ausgebildet sein, wobei zum besseren Einfüllen von Proben dieser Halter drehbar ausgestaltet ist.

In einer vorteilhaften Ausführungsform ist im Wägeraum am Wagengehäuse ein Wägelift angeordnet, wobei der Lift eine gitterförmige oder mit Lamellen versehene Liftplattform aufweist, die von unten entsprechend in das Gitter des Trägers für die Waagschale in der Weise eingreift, dass das Wägegut vom Gitter abgehoben wird. Dieser Vorgang automatisiert den Tariervorgang. Es ist nicht mehr erforderlich das Wägegut vor jedem Tariervorgang manuell wegnehmen bzw. auflegen zu müssen. Dadurch wird eine mögliche Quelle für Fehlmessungen ausgeschieden. Es können somit Langzeitmessungen durchgeführt und auch zwischen den einzelnen Wägungen Kalibrierungen vorgenommen werden.

Weitere besondere Ausgestaltungen der erfindungsgemässen Waage, erlauben es, entweder Code-Identifikationssysteme oder Experimentiereinrichtungen, beispielsweise zur Trübungsmessung, in die Waage zu integrieren und damit Arbeitsvorgänge zu vereinfachen.

Die mit der Erfindung verbundenen Vorteile liegen nunmehr in der kompakten Bauweise und in der Vielseitigkeit für Anwendungen in Labors durch den modularen Aufbau. Die Erfindung zeichnet sich durch eine hohe Flexibilität und eine schnelle Umrüstbarkeit für einzelne Anwendungen aus. Darüber hinaus kann die Reinigung der einzelnen Komponenten in sehr einfacher Weise erfolgen.

Ausführungsbeispiele der Erfindung werden im folgenden in den stark schematisierten Zeichnungen dargestellt. Es zeigen:
- Fig. 1: eine Seitenansicht der Waage,
- Fig. 2: eine Verwendung des Haltesystems mit einem Zwischenboden in dreidimensionaler Darstellung,
- Fig. 3: eine Verwendung des Haltesystems mit einer zusätzlich eingehängten schwenkbaren Waagenanzeige in dreidimensionaler Darstellung,
- Fig. 4, 4A und 4B: weitere Verwendungsmöglichkeiten des Zwischenbodens in dreidimensionaler Darstellung,
- Fig. 5: eine andere Verwendung des Haltesystems in dreidimensionaler Darstellung,
- Fig. 6A bis 6C: ein Mechanismus für die Höhenverstellung des Haltesystems, A in Seitenansicht, B in Draufsicht und C ein Ausschnitt in Draufsicht mit elektrischem Leiteranschluss,
- Fig. 7: ein Haltesystem mit Lift in dreidimensionaler Darstellung,
- Fig. 8: eine Plattform des Lifts in einer Gitterausführung mit Träger in der Seitenansicht,
- Fig. 9A und 9B: die Funktionsweise des Lifts in dreidimensionaler Darstellung,
- Fig. 10: ein Innenwindschutz mit motorisch auf- und ab bewegbaren Seitenwänden in dreidimensionaler Darstellung,
- Fig. 11: eine Einrichtung zur Code-Erfassung am Wägegefäss in der Seitenansicht,
- Fig. 12: eine Einrichtung zur Trübungsmessung des Wägegutes in der Seitenansicht.

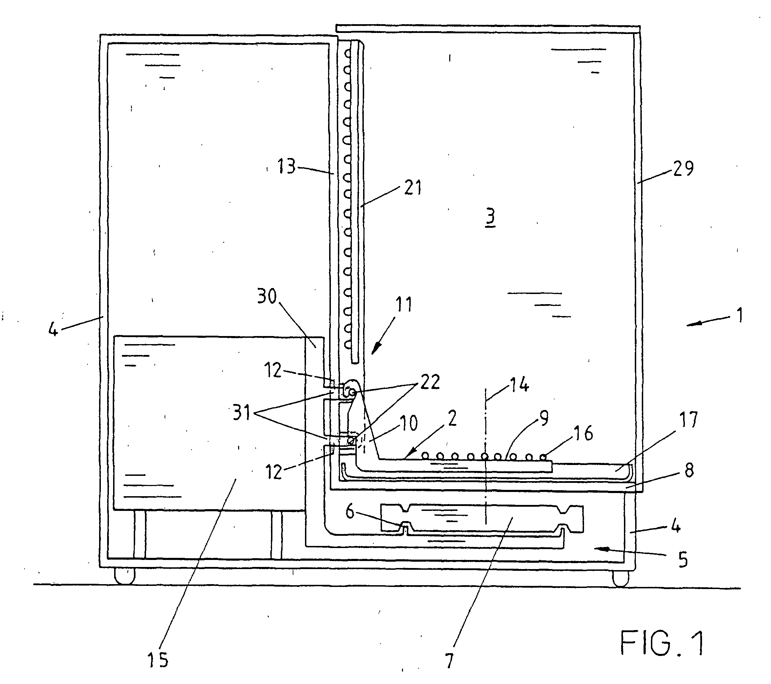

Die Figur 1 zeigt eine Seitenansicht der Waage 1 mit dem Waagengehäuse 4 und dem den Wägeraum 3 umgebenden Windschutz 29. Im linken Teil des Waagengehäuses 4 befindet sich die nicht näher dargestellte Wägezelle 15. Mit der Wägezelle 15 ist zur Krafteinleitung ein L-förmiger Ausleger 30 mit der Kalibriervorrichtung 5 verbunden, wobei im unteren Bereich des Auslegers 30 eine Auflage 6 für die Kalibriergewichte 7 vorgesehen ist. Die Kalibriervorrichtung 5 befindet sich in einem oben durch den Boden 8 des Wägeraumes 3 abgeschlossen Teil des Waagengehäuses 4. Am senkrechten Teil des L-förmigen Auslegers 30 sind in Richtung Wägeraum 3 Fortsätze 31 angebracht, die durch die Durchführungen 12 der Rückwand 13 des Wägeraumes 3 ragen. Diese Fortsätze 31 bilden mit den seitlich herausragenden Haltebolzen 22 die Koppelanordnung 11 für die Einhängungen 10 des Trägers 2. Der Träger 2 dient als Auflage für die verschiedensten Aufsätze zu unterschiedtichen Anwendungen, beispielsweise für Schalen, Laborgefässe, sonstige Behälter für Wägegüter oder für Wägegüter selbst. In diesem Beispiel ist der Träger 2 als ebenes Gitter 16 ausgebildet.

Die Verwendung eines Gitters 16 reduziert den möglicherweise Fehlmessungen verursachenden Windeinfluss, da die Oberfläche bei einem Gitter 16 geringer ist als bei einem vollflächigen Träger.

Andere Ausgestaltungen des Trägers 2 sind denkbar, beispielsweise als Halter für ein oder mehrere Laborgefässe, wobei der Halter über einen Adapter an der Koppelanordnung 11 befestigt ist und dadurch sogar noch drehbar ausgebildet sein kann.

Selbstverständlich kann ein Träger 2 für das Wägegut auch an einem Ausleger 30 der Wägezelle 15 befestigt sein, welcher unterhalb des Wägeraumbodens 8 geführt ist. Der Träger 2, sei es in Form eines Gitters oder einer üblichen Waagschale ist in einem solchen Falle durch eine Durchbrechung am Wägeraumboden 8 mit dem Ausleger 30 der Wägezelle 15 verbunden. Im Übrigen ist eine erfindungsgemässe Waage 1 nicht zwangsweise mit einer Kalibriervorrichtung 5 versehen.

Mit dem Bezugszeichen 17 ist in der Figur 1 eine Auffangschale gekennzeichnet, die dazu dient, vom Träger 2 herab gefallenes Wägegut aufzufangen. Die Auffangschale 17 kann herausnehmbar ausgestaltet sein, wodurch eine leichte Reinigung des Wägeraums 3 gewährleistet ist.

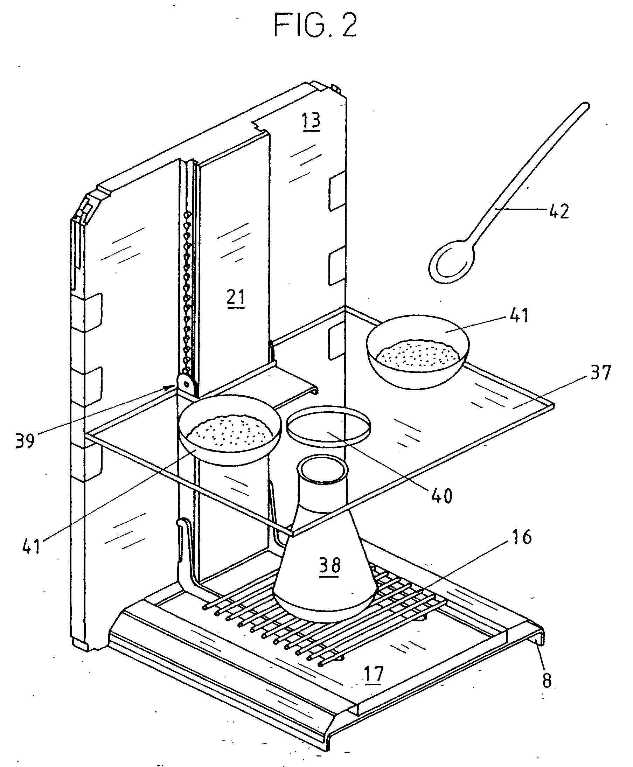

An der Rückwand 13, oberhalb der seitlichen Aufhängung des Trägers 2 über die Einhängungen 10 an den sich nahe der Wand befindlichen Haltebolzen 22 der Fortsätze 31 ist im Inneren des Wägeraumes 3 ein Haltesystem 21 vorgesehen. Dieses Haltesystem 21 bietet eine Vielzahl von Erleichterungen und Anwendungen für den Wägebetrieb. Insbesondere erlaubt dieses an der Rückwand 13 angeordnete Haltesystem 21 das Befestigen von Wägeraum-Zubehör auf verschiedenen Höhen über dem Boden 8. Damit wird ein Experimentieren innerhalb des Wägeraums 3 möglich. Einige vorteilhafte Ausgestaltungen des am Haltesystem befestigbaren Wägeraum-Zubehörs und die Vielfalt von Anwendungen des Haltesystems ist in den Figuren 2 bis 5 exemplarisch dargestellt und im Folgenden beschrieben.

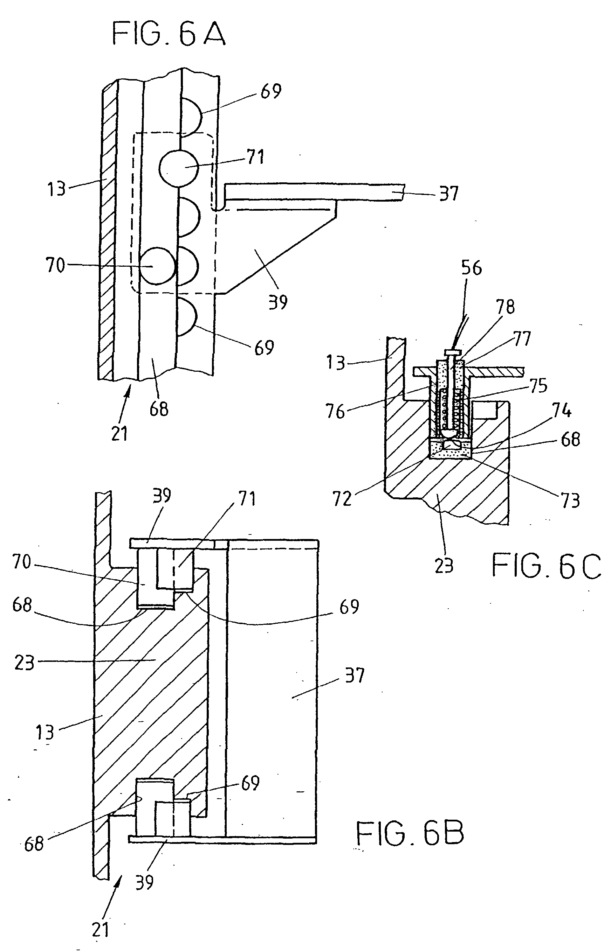

Die Figur 2 zeigt in perspektivischer Sicht in den Wägeraum 3 die Verwendung eines Zwischenbodens 37, der höhenverstellbar an dem Haltesystem 21 eingehängt ist. Der Zwischenboden 37 dient, wie beispielhaft in der Figur 2 gezeigt, als Ablage für Behälter 41 für zu wägende Substanzen, die beispielsweise mittels eines Löffels 42 durch eine Öffnung 40 in das auf dem als Gitter 16 ausgebildeten Träger 2 befindliche Laborgefäss 38 gegeben werden können. Selbstverständlich können auch Zwischenböden ohne Öffnung eingesetzt werden. Eine mögliche Ausführungsform der Einhängevorrichtung 39 des Zwischenbodens 37 an das Haltesystem 21 wird weiter unten und anhand der Figuren 6A bis 6C beschrieben.

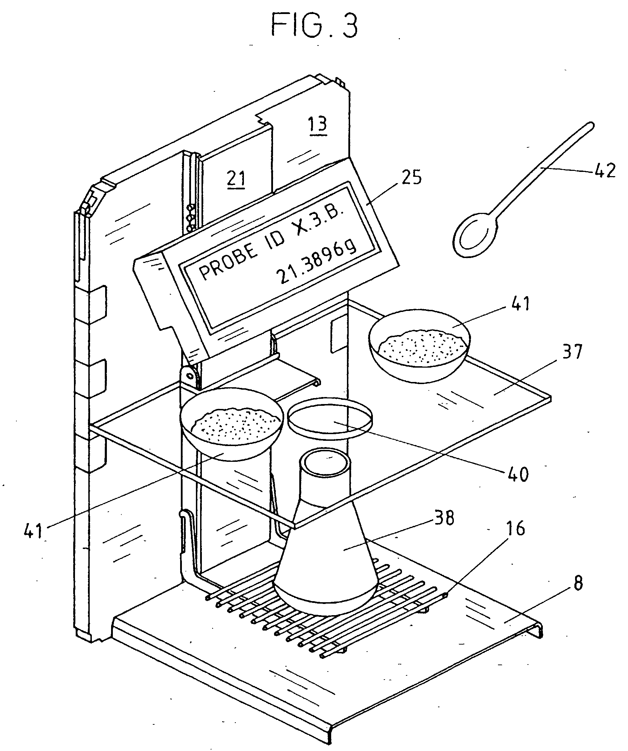

In Figur 3 ist, zusätzlich zu dem in Figur 2 gezeigten Zwischenboden 37, eine schwenkbare Waagenanzeige 25 höhenverstellbar an dem Haltesystem 21 eingehängt, dargestellt. Die in dieser Weise angebrachte Waagenanzeige 25 ist aus ergonomischer Sicht besonders vorteilhaft, da die Bedienungsperson beim Zugeben von Substanzen gleichzeitig das derzeitige Gewicht direkt, ohne den Blick ändern zu müssen, ablesen kann.

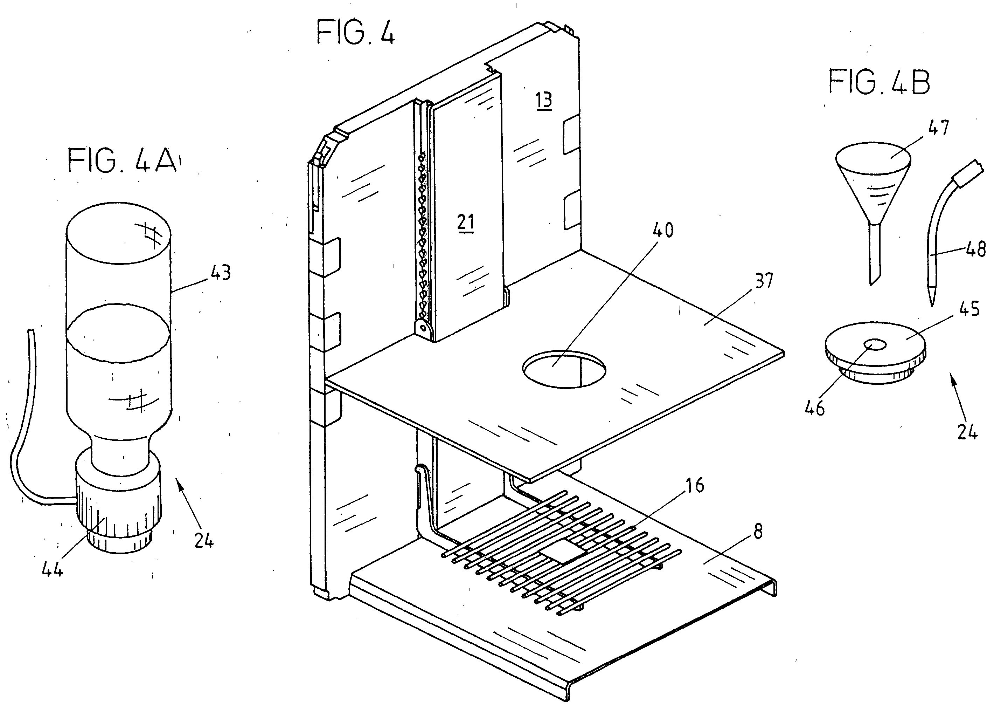

Im Zusammenhang mit der Öffnung 40 dient der Zwischenboden 37, wie in Figur 4 dargestellt, dem Haltern und Befestigen von Laboreinrichtungen 24. In der Figur 4A ist beispielsweise ein ein Pulver enthaltendes Gefäss 43 gezeigt, welches an der Unterseite mit einem steuerbaren Dosiersystem 44 abgeschlossen ist. Das Dosiersystem 44 kann mit dem Gefäss 43 in die Öffnung 40 eingesetzt oder gar eingerastet werden. Die Figur 4B zeigt einen in die Öffnung 40 einsetzbaren Adapter 45, in den zum Beispiel ein oder mehrere kleinere Öffnungen 46 zur Durchführung von Trichtern 47, Schläuchen 48 etc. angeordnet sind.

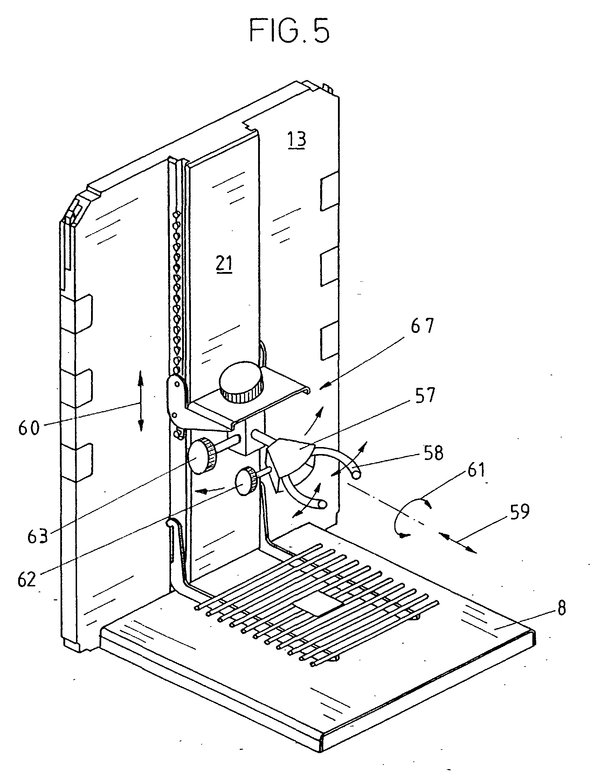

Eine weitere mögliche Anwendung für das Haltesystem 21 ist in Figur 5 gezeigt. Die an dem Haltesystem 21 in Richtung des Doppelpfeiles 60 höhenverstellbare Halterung 67 weist eine Halteklemme 57 auf, in die verschiedene nicht gezeigte Zusatzeinrichtungen, beispielsweise Laborgefässe, Laboreinrichtungen, Dosiersysteme für Pulver oder Flüssigkeiten oder sonstiges Wäge-Zubehör eingeklemmt werden können. Mittels der Rändelschrauben 62 und 63 ist eine federnde zweiarmige Klammer 58 in Richtung der Doppelpfeile 59 und 61 längs verstellbar oder drehbar ausgestaltet.

Das Haltesystem 21 bietet weitere vielgestaltige Möglichkeiten, Einrichtungen innerhalb des Wägeraums 3 zu installieren. So ist es denkbar, einen lonisator (hier nicht dargestellt) höhenverstellbar am Haltesystem 21 einzuhängen und so in flexibler Weise einer elektrischen Aufladung des Wägeguts entgegenzuwirken.

Einen von vielen möglichen Einhängemechanismen für Zwischenböden 37 und/oder Halterungen 67 in das Haltesystem 21 zeigt die Figur 6A in Seitenansicht und Figur 6B im Schnitt. An der Rückwand 13 ist das Haltesystem 21 als säulenartiger Vorsprung 23 ausgebildet. Beidseitig des Haltesystems 21 ist jeweils eine vertikal verlaufende Nut 68 im Haltesystem 21 vorgesehen. Im unteren Bereich des säulenartigen Vorsprungs 23 in der Flucht der Nuten 68 ist die Koppelanordnung 11, an welcher der Träger 2 angebracht ist, angeordnet (siehe auch in den Figuren 2 bis 5). Die Nuten 68 weisen in Richtung der Vorderseite des Haltesystems 21 regelmässig angeordnete, halbkreisförmige Aussparungen 69 auf, in welche Zapfen 71 der Einhängevorrichtung 39 des Zwischenbodens 37 oder der Halterung 67 formschlüssig eingreifen. Die gegenüber den Zapfen 71 nach hinten versetzten Zapfen 70 verbleiben im eingehängten Zustand in den Nuten 68. Durch leichtes Anheben des Zwischenbodens 37 oder der Halterung 67 an dem jeweils zum Bediener der Waage weisenden Ende gelangen die Zapfen 71 in die Nuten 68, wobei die Zapfen 70 die Verkippungsachse bilden. Die Zapfen 70 und 71 können nun in den Nuten 68 nach oben oder unten verschoben werden, bis durch Waagrechtstellung des Zwischenbodens 37 oder der Halterung 67 die Zapfen 71 wieder in jeweils eine der halbkreisförmigen Aussparungen 69 rechts und links am Haltesystem 21 eingreifen.

Ein Mechanismus zum stufenlosen Verstellen der Einhängevorrichtung 39 des Zwischenbodens 37 oder der Halterung 67 ist ebenfalls realisierbar. Indem beispielsweise auf das Raster der halbkreisförmigen Aussparungen verzichtet wird und der Abstand zwischen den Zapfen 70 und 71 klein genug ist, kann der Zwischenboden 37 in seiner Waagrechtstellung nunmehr durch Reibung zwischen Zapfen 70, 71 und Nuten 68 in seiner stabilen Lage verbleiben.

Eine motorische Verstellung der Einhängevorrichtung 39 des Zwischenbodens 37 und/oder der Halterung 67 mit der Halteklemme 57 soll an dieser Stelle ebenfalls in Betracht gezogen werden.

Die Einzelheit in Figur 6C zeigt im Schnitt eine Ausgestaltung des Einhängemechanismus für das Haltesystem 21, mit der die Zuführung für elektrischen Strom und/oder Daten ermöglicht wird. In die Nuten 68 ist (vorzugsweise auf einer Seite des Haltesystems 21) auf einer Isolation 73 eine Leiterschiene 72 eingebettet. An der Einhängevorrichtung 39 des Zwischenbodens 37 oder der Halterung 67 ist ein hohler Zapfen 76 mit Isolierung 77 angeordnet, in den ein mittels einer Feder 75 gefederter Kontaktstift 78 eingelassen ist, so dass mit dem Kontaktkopf 74 ein Schleifkontakt gebildet wird. Somit können elektrische Signale bzw. Daten über die Leitungen 56, den Stift 78 und der Schiene 72 übermittelt werden.

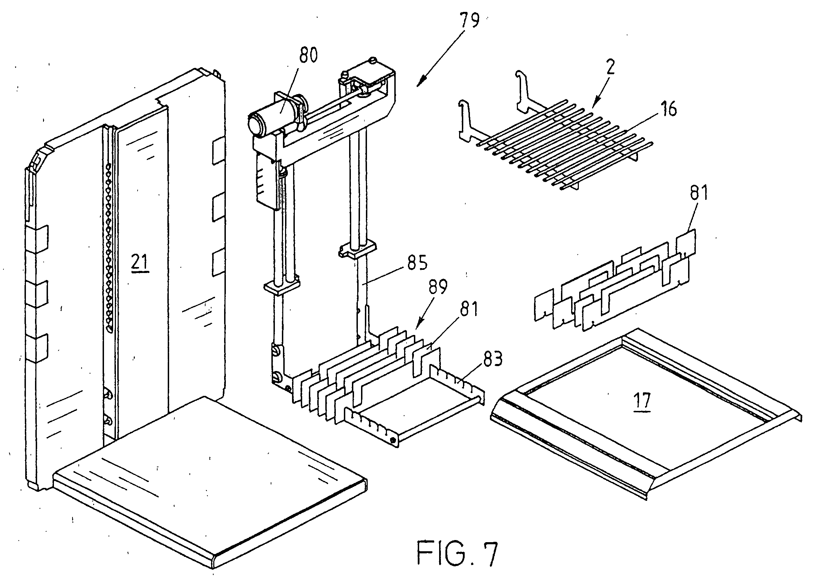

Die Figur 7 zeigt in perspektivischer Sicht einen in das Haltesystem 21 einhängbaren Wägelift 79. Der aus einem L-förmigen Gestell 85 aufgebaute Lift trägt im oberen Bereich einen Lift-Motor 80, der über ein Hebelsystem eine aus Armen 83 und Lamellen 81 aufgebaute Liftplattform 89 heben und senken kann. Die Lamellen 81 ragen von unten in die Zwischenräume eines als Gitter 16 ausgestalteten Trägers 2.

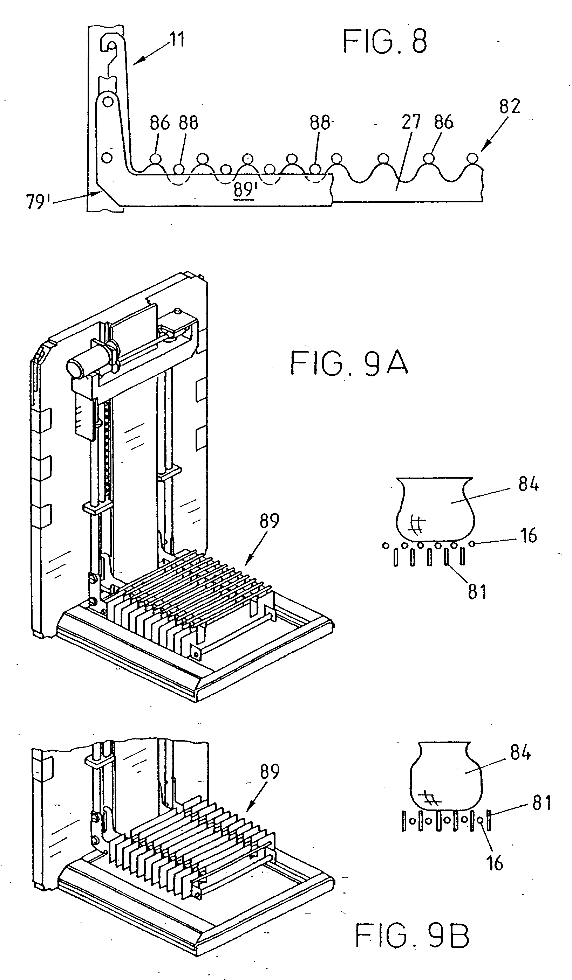

In der Figur 8 ist eine andere Ausführung des Wägelifts 79' als Ausschnitt im Bereich des Trägers 82 und der Liftplattform 89' in Seitenansicht dargestellt. Der mittels der Koppelanordnung 11 eingehängte Träger 82 zur Aufnahme des Wägegutes besitzt eine angepasste Gitterausführung in Form eines Rechens, bei dem die beiden seitlichen Begrenzungen 27 des Trägers 82 auf ihrer Oberseite ein sinusförmiges Längs-Profil besitzen, wobei auf den Kuppen die Gitterstäbe 86 befestigt sind. Zwischen den Gitterstäben 86 des Trägers 82, in den Tälern des sinusförmigen LängsProfils liegen die Gitterstäbe 88 des Lifts 79' im normalen Wägebetrieb unterhalb der Gitterstäbe 86 des Trägers 82 und gelangen durch Anheben des Lifts 79' in eine Lage oberhalb der Gitterstäbe 86 des Trägers 82.

Die Funktionsweise des Liftes 79 ist beispielhaft für die Lamellenausführung in den Figuren 9A und 9B dargestellt. Figur 9A zeigt den Lift 79 in der Wiegestellung, wobei sich das zu wiegende Gefäss 84 auf dem als Gitter 16 ausgebildeten Träger 2 befindet. Die Lamellen 81 sind abgesenkt. Figur 9B zeigt die Ruhestellung. Das Gefäss 84 steht auf den angehobenen Lamellen 81. Der mit der Waage verbundene, als Gitter 16 ausgebildete Träger 2 ist unbelastet. Die Trägerfläche des Liftes ist durch den lamellenartigen Aufbau leicht zu reinigen. Das gleiche gilt für den Träger 2 der eigentlichen Waage. Eine nutzbringende Anwendung dieser Einrichtung ergibt sich für Langzeitanwendungen der Waage, beispielweise für die Langzeitbeobachtung einer Wägung, bei welcher in vordefinierten Abständen ein Tarieren der Waage, in diesem Falle ohne Gefäss, notwendig wird. Auch die Durchführung einer Kalibrierung der Waage während des Verlaufs einer Langzeitanwendung der Waage ist denkbar. Als weitere Anwendung des Wägelifts soll auch auf das Mehrfach-Wiegen einer Probe zur Ermittlung statistischer Grössen, wie etwa der Standardabweichung, ohne dass der Bediener die Probe von Hand auflegen oder wieder abheben müsste, hingewiesen werden.

Das Gestell 85 des Lifts 79, 79' ist derart ausgestaltet, dass am Haltesystem 21 auch bei installiertem Lift 79, 79' weiterhin Wägeraum-Zubehör, beispielsweise ein Zwischenboden 37 oder eine Halterung 67, höhenverstellbar befestigt werden kann.

Denkbar ist es auch, den Lift 79, 79' für weitere Anwendungen flexibel auszugestalten. Indem beispielsweise die Lamellen 81 oder die Liftplattform 89, 89' abnehmbar ausgebildet sind, kann der Lift 79, 79' in Anwendungsfällen, bei denen keine Zwischentarierung oder Kalibrierung im laufenden Wägebetrieb notwendig ist, für die motorische Höhenverstellung des am Haltesystem 21 befestigbaren Wägeraum-Zubehörs, beispielsweise eines Zwischenbodens 37 oder einer Halterung 67, dienen. Diese sind dann nicht direkt in das Haltesystem 21 eingehängt, sondern in den Lift 79, 79', der seinerseits jedoch wiederum am Haltesystem 21 befestigt ist. Alternativ kann das Haltesystem 21 selbst als eine Art Lift ausgebildet sein.

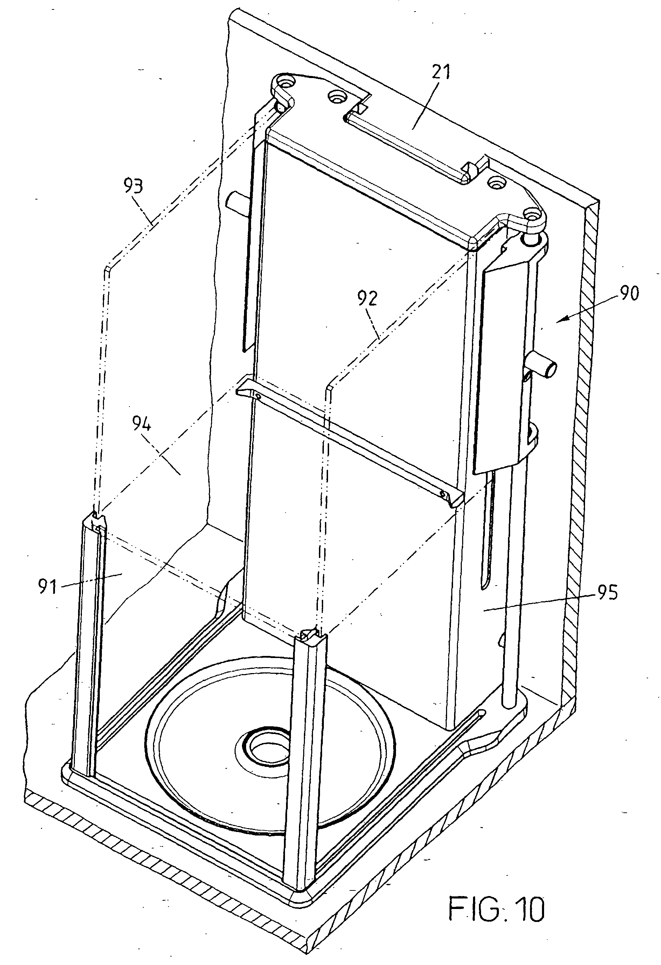

Das Haltesystem 21 dient der Befestigung von noch weiteren nutzbringenden Einrichtungen im Wägeraum 3, wie Figur 10 zeigt. Für den Einsatz der Waage im höchstempfindlichen Wägebereich mit beispielsweise einer geforderten Genauigkeit um 0.1 bis 1 Mikrogramm wird ein Innenwindschutz 90, der innerhalb des den Wägeraum 3 umschliessenden ersten Windschutzes 29 angebracht ist, eingesetzt. Dieser Innenwindschutz 90 besteht aus einer Vorderwand 91, zwei Seitenwänden 92, 93, einer Abdeckung 94 und einem Antriebsraum 95. Letzterer bildet den rückwärtigen Abschluss des Innenwindschutzes 90 und wird am Haltesystem 21 eingehängt. Im Antriebsraum 95 befindet sich ein von einem sich im oberen Bereich des Antriebsraums 95 befindlichen Motor angetriebener Seilzugantrieb, der mit den Seitenwänden 92, 93 verbunden ist. Mit Hilfe des Seilzugantriebs - es kann sich ebenso gut auch um einen Zahnriemenantrieb handeln - sind die Seitenwände 92, 93 somit einzeln oder gemeinsam zum Öffnen und Schliessen des Innenwindschutzes 90 auf und ab fahrbar. Der Innenwindschutz 90 kann leicht wieder aus dem Wägeraum 3 entfernt werden, da er vorzugsweise lediglich am Haltesystem 21, ähnlich dem Zwischenboden 37, eingehängt ist. Insbesondere ist der Innenwindschutz 90 auch für Waagen einsetzbar, deren Träger für das Wägegut an einem Ausleger der Wägezelle befestigt ist, welcher unterhalb des Wägeraumbodens geführt ist und durch eine Durchbrechung am Wägeraumboden mit dem Ausleger der Wägezelle verbunden ist.

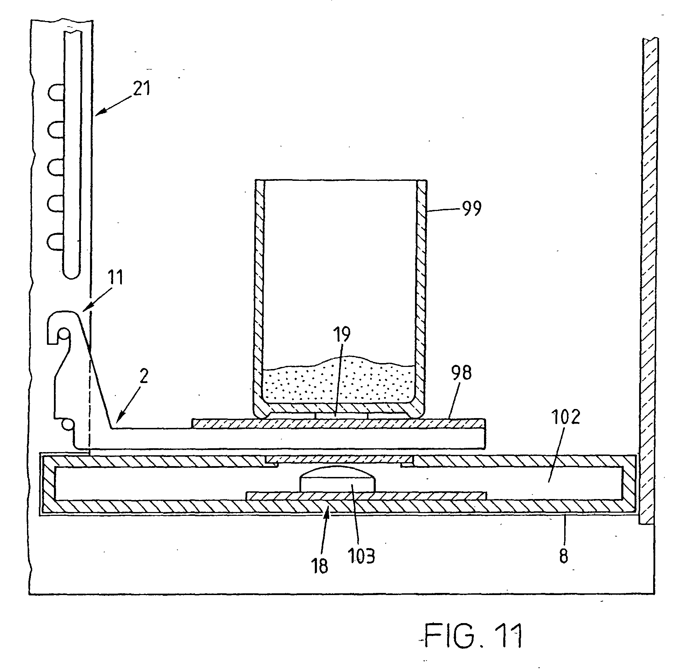

Im Falle der besonders flexible Ausgestaltung des als Waagschale dienenden Trägers 2 derart, dass dieser mittels der Koppelanordnung 11 mit der Wägezelle 15 durch Durchführungen 12 an der Rückwand 13 des Wägeraumes 3 verbunden ist und damit der Boden des Wägeraums 3 frei ist, kann unterhalb des Trägers 2 am Boden 8 der Waage eine optische oder induktive Einrichtung zur Codeerfassung 18 des Wägeguts, durch beispielsweise am Boden des Gefässes 99 angebrachte Codes 19, installiert werden. Wie in der Figur 11 zu sehen ist, befindet sich die optische oder induktive Einrichtung zur Codeerfassung 18 in einem Einschub 102. Dabei sind der Sender und der Empfänger vorzugsweise im gleichen Sensorgehäuse 103 untergebracht. Die Auflage 98 des Trägers 2 ist im Bereich des Codes 19 entweder durchsichtig gestaltet, z.B. aus Glas, (im Falle der optischen Erkennung) oder aus nichtinduktivem Material, z.B. Keramik oder Kunststoff (im Falle der induktiven Erkennung) gefertigt.

Die Einrichtung zur Codeerfassung 18, sei es über optische oder induktive Sensoren, kann selbstverständlich auch seitlich des Trägers 2 angebracht sein, wobei der entsprechende Code ebenfalls an der Seite des Gefässes 99 angebracht ist. Insbesondere kann die Einrichtung zur Codeerfassung 18 höhenverstellbar in das Haltesystem 21 einhängbar ausgestaltet sein.

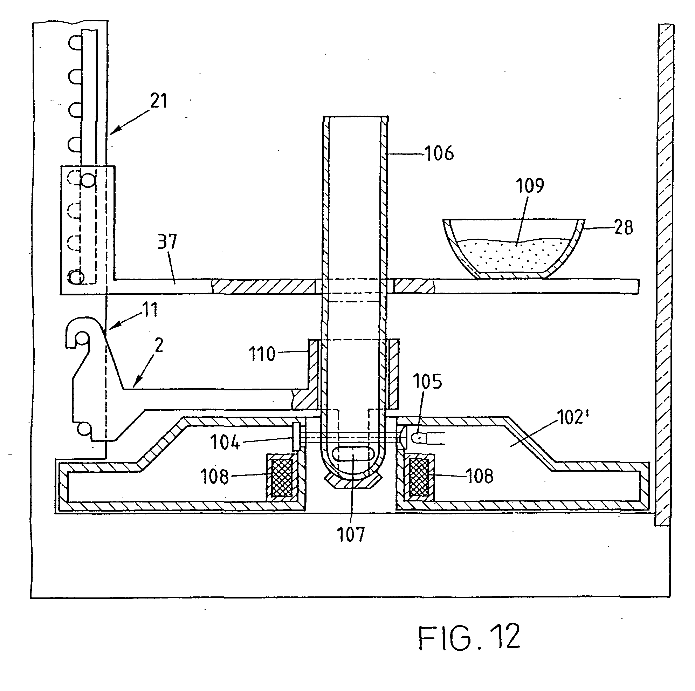

Auch Trübungsmessungen sind innerhalb des Wägeraums 3 durchführbar (siehe Figur 12) mittels eines ebenfalls am Boden 8 des Wägeraums 3 eingebrachten Einschubs 102'. Der Einschub 102' besitzt eine höckerartige Ausbuchtung nach oben, in welcher ein Laser 104 als Sender und eine Photodiode 105 als Empfänger untergebracht sind. Die Trübungsmessung erfolgt in Transmission eines durchsichtigen und an den Stellen des Lichtdurchtritts plan geschliffenen Messgefässes 106. Im unteren Bereich des Messgefässes 106 kann ein Rührer, beispielsweise ein Magnetrührer 107, vorhanden sein, der im Wechselfeld der Magnete 108 angetrieben wird. Das Messgefäss 106 wird von der Befestigung 110 gehalten, welche mit dem Träger 2 verbunden ist. Besonders vorteilhaft ist es, dass Gewichtsveränderung und Trübung in einem Arbeitsgang verfolgt werden können. Aus einem Glasgefäss 28, das sich auf dem in das Haltesystem 21 eingehängten Zwischenboden 37 befindet, wird in das Messgefäss 106, welches durch eine Öffnung des Zwischenbodens 37 ragt, eine Substanz 109 eingefüllt. Damit verändert sich die Trübung der im Messgefäss 106 befindlichen Flüssigkeit, aber auch deren Gewicht. Im Anschluss an eine Trübungsmessung kann bei stillstehendem Magnetrührer 107 beispielsweise das Gewicht der im Messgefäss 106 befindlichen Flüssigkeit bestimmt werden.

Für Messeinrichtungen und Experimentiervorrichtungen jeglicher Art, die im Wägeraum installiert werden, sind elektrische Zufuhrleitungen oder auch Schläuche zur Zuführung von Flüssigkeiten durch mit Clips verschliessbaren Aussparungen zuführbar, wie im Detail in der EP-A-1 195 585 beschrieben ist.

Wie bereits erwähnt, ist die Ausgestaltung des Wägeraums mit ExperimentierEinrichtungen der beschriebenen Art nicht ausschliesslich auf Waagen begrenzt, deren Krafteinleitung mittels Durchführungen an der Rückwand des Wägeraums erfolgt, sondern ist auch auf Waagen mit einer durch den Boden des Wägeraums geführten Krafteinleitung oder anderen, hier nicht näher beschriebenen Waagentypen anwendbar.

### Bezugszeichenliste

- 1: Waage
- 2: Träger
- 3: Wägeraum
- 4: Waagengehäuse
- 5: Kalibriervorrichtung
- 6: Auflage
- 7: Kalibriergewicht
- 8: Boden
- 9: Trägerebene
- 10: Einhängung
- 11: Koppelanordnung
- 12: Durchführungen
- 13: Rückwand
- 14: Achse
- 15: Wägezelle
- 16: Gitter
- 17: Auffangschale
- 18: Einrichtung zur Codeerfassung
- 19: Code
- 21: Haltesystem
- 22: Haltebolzen
- 23: säulenartiger Vorsprung
- 24: Laboreinrichtungen
- 25: Waagenanzeige
- 27: seitliche Begrenzungen
- 28: Glasgefäss
- 29: Windschutz
- 30: Ausleger
- 31: Fortsätze
- 37: Zwischenboden
- 38: Laborgefäss
- 39: Einhängevorrichtung
- 40: Öffnung
- 41: Behälter
- 42: Löffel
- 43: Gefäss
- 44: Dosiersystem
- 45: Adapter
- 46: Öffnungen
- 47: Trichter
- 48: Schläuche
- 56: Leitung
- 57: Halteklemme
- 58: zweiarmige Klammer
- 59: Doppelpfeil
- 60: Doppelpfeil
- 61: Doppelpfeil
- 62: Rändelschraube
- 63: Rändelschraube
- 67: Halterung
- 68: Nut
- 69: halbkreisförmige Aussparung
- 70: Zapfen
- 71: Zapfen
- 72: Leiterschiene
- 73: Isolation
- 74: Kontaktkopf
- 75: Feder
- 76: hohler Zapfen
- 77: Isolierung
- 78: Kontaktstift
- 79: Lift
- 79': Lift
- 80: Lift-Motor
- 81: Lamellen
- 82: Träger
- 83: Arme
- 84: Gefäss
- 85: Gestell
- 86: Gitterstäbe des Trägers
- 88: Gitterstäbe des Lifts
- 89: Liftplattform
- 89': Liftplattform
- 90: Innenwindschutz
- 91: Vorderwand
- 92: Seitenwand
- 93: Seitenwand
- 94: Abdeckung
- 95: Antriebsraum
- 98: Auflage
- 99: Gefäss
- 102: Einschub
- 102': Einschub
- 103: Sensorgehäuse
- 104: Laser
- 105: Photodiode
- 106: Messgefäss
- 107: Magnetrührer
- 108: Magnete
- 109: Substanz
- 110: Befestigung

## Patentansprüche

1. Waage (1) mit einem Wägeraum (3), einem eine Wägezelle (15) enthaltenden, die Rückwand (13) und den Boden (8) des Wägeraums (3) bildenden Waagengehäuse (4) und einem Träger (2) zur Aufnahme von Wägegut an einem Ausleger (30) der Wägezelle (15), **dadurch gekennzeichnet, dass** an der Rückwand (13) des Wägeraums (3) ein festes Haltesystem (21) für das Befestigen von Wägeraum-Zubehör auf verschiedenen Höhen über dem Boden (8) angeordnet ist.

2. Waage (1) nach Anspruch 1, **dadurch gekennzeichnet, dass** das Haltesystem (21) zwei parallel zur Rückwand (13) vertikal verlaufende Nuten (68) aufweist.

3. Waage (1) nach Anspruch 2, **dadurch gekennzeichnet, dass** entlang der Rückwand (13) ein säulenartiger Vorsprung (23) verläuft und die Nuten (68) seitlich in diesem Vorsprung (23) verlaufen.

4. Waage (1) nach einem der Ansprüche 1 bis 3, **dadurch gekennzeichnet, dass** das Haltesystem (21) eine Vielzahl von gleichartigen Formungen (69) aufweist, durch welche ein entsprechend geformtes Gegenstück (71) des Wägeraum-Zubehörs formschlüssig gehalten wird.

5. Waage (1) nach einem der Ansprüche 1 bis 4, **dadurch gekennzeichnet, dass** an das Haltesystem (21) mindestens ein Zwischenboden (37) und/oder mindestens eine Halterung (67) für Zusatzeinrichtungen in der Höhe verstellbar anbringbar sind.

6. Waage (1) nach Anspruch 5, **dadurch gekennzeichnet, dass** am Zwischenboden (37) oder an der Halterung (67) weitere Haltevorrichtungen befestigbar sind.

7. Waage (1) nach einem der Ansprüche 1 bis 6, **dadurch gekennzeichnet, dass** das Haltesystem (21) Kontaktschienen (72) für eine Strom- und/oder eine Datenversorgung aufweist.

8. Waage (1) nach einem der Ansprüche 1 bis 7, **dadurch gekennzeichnet, dass** an das Haltesystem (21) im Wägeraum (3) verschiedene Laboreinrichtungen (24), insbesondere eine Dosiervorrichtung (44) für Flüssigkeiten und/oder Feststoffe, ein lonisator und/oder eine schwenkbare Waagenanzeige (25) in der Höhe verstellbar anbringbar sind.

9. Waage (1) nach einem der Ansprüche 1 bis 8, **dadurch gekennzeichnet, dass** an das Haltesystem (21) im Wägeraum (3) ein Innenwindschutz (90) mit nach oben verschiebbaren Seitenwänden (92, 93) anbringbar ist.

10. Waage (1) nach einem der Ansprüche 1 bis 9, **dadurch gekennzeichnet, dass** am Haltesystem (21) eine Einrichtung zur Codeerfassung höhenverstellbar angebracht ist, wobei ein zu erfassender Code an der Seite eines Gefässes (99) für das Wägegut angebracht ist.

11. Waage (1) nach einem der Ansprüche 1 bis 10, **dadurch gekennzeichnet, dass** am Haltesystem (21) ein motorischer Antrieb vorhanden ist für die Höhenverstellung des am Haltesystem (21) angebrachten Wägeraum-Zubehörs.

12. Waage (1) nach einem der Ansprüche 1 bis 11, **dadurch gekennzeichnet, dass** der Ausleger (30) der Wägezelle (15) eine durch Durchführungen (12) in der Rückwand (13) des Wägeraums (3) reichende Koppelanordnung (11) aufweist, an welcher der Träger (2) abnehmbar angebracht ist.

13. Waage (1) nach Anspruch 2 oder 3 und 12, **dadurch gekennzeichnet, dass** die Durchführungen (12) im wesentlichen in der Flucht der Nuten (68) angeordnet sind.

14. Waage (1) nach einem der Ansprüche 1 bis 13, **dadurch gekennzeichnet, dass** der Träger (2) als ebenes Gitter (16) ausgebildet ist.

15. Waage (1) nach einem der Ansprüche 1 bis 14, **dadurch gekennzeichnet, dass** der Träger (2) als Halter für ein oder mehrere Laborgefässe ausgebildet ist.

16. Waage (1) nach einem der Ansprüche 12 bis 15, **dadurch gekennzeichnet, dass** zwischen Träger (2) und Boden (8) eine feste oder herausnehmbare Auffangschale (17) angeordnet ist.

17. Waage (1) nach einem der Ansprüche 12 bis 15, **dadurch gekennzeichnet, dass** am Boden (8) des Wägeraums (3) ein Einschub (102) anbringbar ist, der eine Einrichtung zur Codeerfassung (18) enthält, wobei ein zu erfassender Code (19) am Boden eines Wägegutgefässes (99) angebracht ist.

18. Waage (1) nach einem der Ansprüche 12 bis 15, **dadurch gekennzeichnet, dass** am Boden (8) des Wägeraums (3) ein Einschub (102') anbringbar ist, der eine Einrichtung zur Messung der Trübung (104, 105) des Wägeguts enthält.

19. Waage (1) nach einem der Ansprüche 12 bis 15 oder 18, **dadurch gekennzeichnet, dass** am Boden (8) des Wägeraums eine Einrichtung zum Rühren (107, 108) im Messgefäss (106) anbringbar ist.

20. Waage (1) nach einem der Ansprüche 12 bis 19 **dadurch gekennzeichnet, dass** an einem mit einer Auflage (6) für Kalibriergewichte (7) einer Kalibriervorrichtung (5) versehenen Ausleger (30) der Wägezelle (15) eine durch Durchführungen (12) in der Rückwand (13) des Wägeraums (3) reichende Koppelanordnung (11) angebracht ist, mittels welcher der Träger (2) abnehmbar angebracht ist, und sich der Boden (8) geschlossen zwischen der Auflage (6) für Kalibriergewichte (7) und dem Träger (2) erstreckt.

21. Waage (1) nach einem der Ansprüche 1 bis 20, **dadurch gekennzeichnet, dass** im Wägeraum (3) am Waagengehäuse (4) ein Wägelift (79, 79) anbringbar ist.

22. Waage (1) nach Anspruch 21, **dadurch gekennzeichnet, dass** ein Motor (80) vorhanden ist zum motorischen Betrieb des Wägelifts (79, 79').

## Claims

1. Balance (1) with a weighing compartment (3) and with a balance housing (4) containing a weighing cell (15) and forming a rear wall (13) and a floor (8) of the weighing compartment (3), and further with a weighing-load carrier (2) arranged on a cantilever arm (30) of the weighing cell (15), **characterized in that** a stationary holder system (21) for attaching weighing-compartment accessories at different heights from the floor (8) is arranged on the rear wall (13).

2. Balance (1) according to claim 1, **characterized in that** the holder system (21) comprises two vertical grooves (68) running parallel to the rear wall (8).

3. Balance (1) according to claim 2, **characterized in that** a projection (23) in the shape of a column extends along the rear wall (13) wherein the grooves 68 extend laterally in said projection.

4. Balance (1) according to one of the claims 1 to 3, **characterized in that** the holder system (21) has a multitude of identically shaped connector formations (69) for a form-fitting attachment of an appropriately shaped counterpart (71) of the weighing-compartment accessories.

5. Balance (1) according to claim 1, **characterized in that** at least a shelf (37) and/or at least an equipment holder (67) for accessory devices can be attached to the holder system (21) at an adjustable height.

6. Balance (1) according to claim 5, **characterized in that** further holder devices can be attached to the shelf (37) or the equipment holder (67).

7. Balance (1) according to one of the claims 1 to 6, **characterized in that** the holder system (21) comprises conducting rails (72) to supply an electric current and/or data signals.

8. Balance (1) according to one of the claims 1 to 7, **characterized in that** a diversity of laboratory devices (24), in particular a dispensing system (44) for liquids and/or solids, an ionizer, and/or a tilt-adjustable display panel (25), can be attached to the holder system (21) in the weighing compartment (3) at height-adjustable locations.

9. Balance (1) according to one of the claims 1 to 8, **characterized in that** an interior draft shield (90) with side walls (92, 93) that open by sliding upward can be attached to the holder system (21).

10. Balance (1) according to one of the claims 1 to 9, **characterized in that** a code-reader device (18) can be attached to the holder device (21) at an adjustable height, wherein a code to be read by the device (18) is attached to the side of a weighing container (99).

11. Balance (1) according to one of the claims 1 to 10, **characterized in that** the holder system (21) comprises a motorized drive for the height adjustment of the weighing compartment accessories that are attached to the holder system (21).

12. Balance (1) according to one of the claims 1 to 11, **characterized in that** the cantilever arm (30) of the weighing cell (15) has a coupling arrangement (11) extending through passage openings (12) in the rear wall (13) of the weighing compartment, wherein the weighing-load carrier (2) is releasably attached to the coupling arrangement (11).

13. Balance (1) according to claim 2 or 3 and 12, **characterized in that** the passage openings (12) are arranged substantially in alignment with the grooves (68).

14. Balance (1) according to one of the claims 1 to 13, **characterized in that** the weighing-load carrier (2) is configured as a level grate (16).

15. Balance (1) according to one of the claims 1 to 14, **characterized in that** the weighing-load carrier (2) is configured as a holder for one or more laboratory containers.

16. Balance (1) according to one of the claims 12 to 15, **characterized in that** a fixed or removable spill-collector plate (17) is arranged between the weighing-load carrier (2) and the floor (8).

17. Balance (1) according to one of the claims 12 to 15, **characterized in that** an insert module (102) can be installed on the floor (8) of the weighing compartment (3), said insert module (102) comprising a code-reader device (18), wherein a code (19) to be read by the device (18) is attached to the underside of a weighing container (99).

18. Balance (1) according to one of the claims 12 to 15, **characterized in that** an insert module (102') can be installed on the floor (8) of the weighing compartment (3), said insert module (102') comprising a device for measuring the turbidity of a weighing sample.

19. Balance (1) according to one of the claims 12 to 15 or 18, **characterized in that** a stirring device (107, 108) can be installed on the floor (8) of the weighing compartment (3) for stirring a substance in the measuring container (106).

20. Balance (1) according to one of the claims 12 to 19, **characterized in that** a coupling arrangement (11) reaching through passage openings (12) in the rear wall (13) of the weighing compartment (3) is attached to a cantilever arm (30) of the weighing cell (15), said cantilever arm (30) being equipped with a weight-receiving element (6) for calibration weights (7) of a calibration device (5), wherein the weighing-load carrier (2) is removably attached by means of the coupling arrangement (11) and the floor (8) extends without openings between the weight-receiving element (6) and the weighing-load carrier (2).

21. Balance (1) according to one of the claims 1 to 20, **characterized in that** a lift mechanism (79, 79') can be attached to the balance housing (4) inside the weighing compartment (3).

22. Balance (1) according to claim 21, **characterized by** having a motor (80) for the motor-powered operation of the lift mechanism (79, 79').

## Revendications

1. Balance (1) comprenant un espace de pesée (3), un boîtier de balance (4) contenant une cellule de pesée (15), formant la paroi arrière (13) et le fond (8) de l'espace de pesée (3) et un support (2) pour le logement de l'objet à peser sur un cantilever (30) de la cellule de pesée (15), **caractérisée en ce qu'**un système de retenue (21) fixe pour la fixation d'accessoires de l'espace de pesée est disposé sur la paroi arrière (13) de l'espace de pesée (3) à différentes hauteurs au-dessus du fond (8).

2. Balance (1) selon la revendication 1, **caractérisée en ce que** le système de retenue (21) présente deux rainures (68) agencées verticalement parallèlement à la paroi arrière (13).

3. Balance (1) selon la revendication 2, **caractérisée en ce qu'**une saillie (23) de type colonne est agencée le long de la paroi arrière (13) et les rainures (68) sont agencées sur le côté dans cette saillie (23).

4. Balance (1) selon l'une quelconque des revendications 1 à 3, **caractérisée en ce que** le système de retenue (21) présente une pluralité de formages (69) similaires, par lesquels une pièce inverse (71) de forme appropriée des accessoires de l'espace de pesée est maintenue par complémentarité de forme.

5. Balance (1) selon l'une quelconque des revendications 1 à 4, **caractérisée en ce qu'**au moins un fond intermédiaire (37) et/ou au moins une fixation (67) pour des équipements supplémentaires peuvent être placés sur le système de retenue (21) de façon réglable en hauteur.

6. Balance (1) selon la revendication 5, **caractérisée en ce que** d'autres dispositifs de retenue peuvent être fixés sur le fond intermédiaire (37) ou sur le support (67).

7. Balance (1) selon l'une quelconque des revendications 1 à 6, **caractérisée en ce que** le système de retenue (21) présente des rails de contact (72) pour une alimentation en courant et/ou une alimentation en données.

8. Balance (1) selon l'une quelconque des revendications 1 à 7, **caractérisée en ce que** différents équipements de laboratoire (24), en particulier un dispositif de dosage (44) pour des liquides et/ou des substances solides, un ioniseur et/ou un dispositif indicateur de balance (25) basculante peuvent être placés sur le système de retenue (21) de façon réglable en hauteur.

9. Balance (1) selon l'une quelconque des revendications 1 à 8, **caractérisée en ce qu'**un pare brise intérieur (90) avec des parois latérales (92, 93) coulissantes vers le haut peut être placé sur le système de retenue (21) dans l'espace de pesée (3).

10. Balance (1) selon l'une quelconque des revendications 1 à 9, **caractérisée en ce qu'**un appareil pour l'enregistrement du code est placé sur le système de retenue (21) de façon réglable en hauteur, un code à enregistrer étant placé sur le côté d'un récipient (99) pour l'objet à peser.

11. Balance (1) selon l'une quelconque des revendications 1 à 10, **caractérisée en ce qu'**un entraînement par moteur est présent sur le système de retenue (21) pour le réglage en hauteur des accessoires de l'espace de pesée placés sur le système de retenue (21).

12. Balance (1) selon l'une quelconque des revendications 1 à 11, **caractérisée en ce que** le cantilever (30) de la cellule de pesée (15) présente un dispositif d'accouplement (11) allant à travers des passages (12) dans la paroi arrière (13) de l'espace de pesée (3), sur lequel le support (2) est placé de façon amovible.

13. Balance (1) selon la revendication 2 ou 3 et 12, **caractérisée en ce que** les passages (12) sont disposés essentiellement dans l'alignement des rainures (68).

14. Balance (1) selon l'une quelconque des revendications 1 à 13, **caractérisée en ce que** le support (2) est conçu comme une grille (16) plane.

15. Balance (1) selon l'une quelconque des revendications 1 à 14, **caractérisée en ce que** le support (2) est conçu comme support pour un ou plusieurs récipients de laboratoire.

16. Balance (1) selon l'une quelconque des revendications 12 à 15, **caractérisée en ce qu'**un bac collecteur (17) fixe ou amovible est disposé entre le support (2) et le fond (8).

17. Balance (1) selon l'une quelconque des revendications 12 à 15, **caractérisée en ce que** sur le fond (8) de l'espace de pesée (3) peut être placé un tiroir (102) qui contient un appareil pour l'enregistrement du code (18), un code (19) à enregistrer étant placé sur le fond d'un récipient d'objet à peser (99).

18. Balance (1) selon l'une quelconque des revendications 12 à 15, **caractérisée en ce que** sur le fond (8) de l'espace de pesée (3) peut être placé un tiroir (102') qui contient un appareil pour la mesure de la turbidité (104, 105) de l'objet à peser.

19. Balance (1) selon l'une quelconque des revendications 12 à 15 ou 18, **caractérisée en ce qu'**un appareil pour l'agitation (107, 108) peut être placé dans le récipient de mesure (106) sur le fond (8) de l'espace de pesée.

20. Balance (1) selon l'une quelconque des revendications 12 à 19, **caractérisée en ce que** sur un cantilever (30), pourvue d'un appui (6) pour les poids de calibrage (7) d'un dispositif de calibrage (5), de la cellule de pesée (15) est placé un dispositif d'accouplement (11) allant à travers des passages (12) dans la paroi arrière (13) de l'espace de pesée (3), au moyen duquel le support (2) est placé de façon amovible, et le fond (8) s'étend fermé entre l'appui (6) pour les poids de calibrage (7) et le support (2).

21. Balance (1) selon l'une quelconque des revendications 1 à 20, **caractérisée en ce qu'**un élévateur de pesée (79, 79') peut être placé dans l'espace de pesée (3) sur le boîtier de balance (4).

22. Balance (1) selon la revendication 21, **caractérisée en ce qu'**un moteur (80) est présent pour le fonctionnement par moteur de l'élévateur de pesée (79, 79').
